# FASCICULE DE BREVET EUROPEEN

(11) **EP 1 765 728 B1**
(45) Date de publication et mention de la délivrance du brevet: **28.07.2010**
(21) Numéro de dépôt: 05782490.6
(22) Date de dépôt: 21.06.2005
(51) Int. Cl.: C01B 25/26, C01B 25/45, C08K 3/32

(54) **PHOSPHATE DE ZIRCONIUM CRISTALLISE A HAUT FACTEUR DE FORME, SON PROCEDE DE PREPARATION ET SON UTILISATION DANS UN MATERIAU MACROMOLECULAIRE.**
KRISTALLISIERTES ZIRKONIUMPHOSPHAT MIT HOHEM FORMFAKTOR, VERFAHREN ZU DESSEN HERSTELLUNG SOWIE VERWENDUNG FÜR EIN MAKROMOLEKULARES MATERIAL
HIGH FORM FACTOR CRYSTALLIZED ZIRCONIUM PHOSPHATE, METHOD FOR THE PREPARATION THEREOF AND USE THEREOF IN A MACROMOLECULAR MATERIAL

(30) Priorité: 22.06.2004 FR 0406769
(43) Date de publication de la demande: 28.03.2007
(73) Titulaire: Rhodia Chimie SA, 92512 Boulogne-Billancourt Cedex (FR)
(72) Inventeur: AUPAIX, Nicole, F-78370 Plaisir (FR); DUPUIS, Dominique, F-60800 Crepy-En-Valois (FR)
(74) Mandataire: Dubruc, Philippe
(86) Numéro de dépôt international: PCT/FR2005/001550
(87) Numéro de publication internationale: WO 2006/008388

(56) Documents cités:
- WO-A-2004/065297
- DE-A1- 10 205 849
- US-A1- 2004 033 186
- ALBERTI G ET AL: "LAYERED AND PILLARED METAL(IV) PHOSPHATES AND PHOSPHONATES" ADVANCED MATERIALS, VCH VERLAGSGESELLSCHAFT, WEINHEIM, DE, vol. 8, no. 4, avril 1996 (1996-04), pages 291-303, XP000587105 ISSN: 0935-9648
- INOUE Y ET AL: "THE SYNTHESIS OF CRYSTALLINE ZIRCONIUM PHOSPHATE WITH LARGE PARTICLE SIZE BY THE DIRECT-PRECIPITATION METHOD" BULLETIN OF THE CHEMICAL SOCIETY OF JAPAN, JAPAN PUBLICATIONS TRADING CO. TOKYO, JP, vol. 52, no. 12, décembre 1979 (1979-12), pages 3528-3531, XP009006594 ISSN: 0009-2673

## Description

La présente invention concerne un phosphate de zirconium cristallisé à haut facteur de forme, son procédé de préparation et son utilisation dans un matériau macromoléculaire.

Pour modifier les propriétés thermomécaniques et d'imperméabilité des matériaux macromoléculaires, il est connu d'utiliser des particules minérales. Il est ainsi possible de modifier, par exemple, le module des matériaux, la résistance au choc, la ductilité, la stabilité dimensionnelle, la température de déformation sous charge, la résistance à l'abrasion ou le pouvoir abrasif. Dans certains cas, comme les latex, on cherche aussi à améliorer les caractéristiques de reprise d'eau et de perméabilité à la vapeur d'eau des matériaux.

Il est connu de renforcer les matériaux macromoléculaires, et en particulier les matériaux thermoplastiques, par des particules plaquettaires d'épaisseur nanométrique en particulier par des particules obtenues par exfoliation à partir d'un composé à base de phosphate de zirconium à structure lamellaire. Le composé à structure lamellaire est traité par un agent de gonflement organique, avant incorporation dans le matériau à renforcer, afin d'assurer son exfoliation, exfoliation qui est importante pour l'amélioration des propriétés thermomécaniques du matériau dans lequel il est introduit.

L'utilisation de produits exfoliés présente toutefois des inconvénients. Tout d'abord, le procédé de préparation de ces produits exfoliés est relativement complexe. Il conduit généralement à des produits qui se présentent sous forme d'un gel ce qui, compte tenu de la quantité d'eau importante dans un gel, rend malaisée l'incorporation de ces produits dans les matériaux macromoléculaires. Par ailleurs, comme indiqué plus haut, leur mise en oeuvre implique des agents de gonflement organiques qui peuvent détériorer la qualité des matériaux macromoléculaires dans lesquels ils sont utilisés ou entraîner, là encore, des difficultés lors de l'incorporation des particules ou lors de la mise en forme des matériaux. Enfin, ces agents sont généralement malodorants, ce qui rend leur manipulation désagréable, ou ce qui nécessite de forts investissements pour s'affranchir de l'odeur.

L'objet de l'invention est de fournir un composé qui ne présente pas les inconvénients qui viennent d'être décrits.

Le brevet US2004/033186 décrit un procédé pour la préparation d'un phosphate de zirconium cristallisé comprenant la précipitation d'un composé de zirconium en milieu acide de l'acide phosphorique, la séparation du précipité, la dispersion du précipité dans une solution d'acide phosphorique 10 M et un traitement thermique à115°C. Les particules obtenues par ce procédé présentent une épaisseur de 200 nm (exemple 1).

Le phosphate de zirconium de l'invention est caractérisé en ce qu'il est cristallisé et en ce qu'il est constitué de particules d'épaisseur d'au plus 30 nm.

L'invention concerne aussi un procédé de préparation d'un tel phosphate qui est caractérisé en ce qu'il comporte les étapes suivantes :
- on met en présence en milieu acide de l'acide phosphorique et un composé du zirconium, ce par quoi on obtient un précipité;
- on sépare ledit précipité du milieu obtenu et on le disperse dans une solution d'acide phosphorique de concentration d'au plus 6M;
- on soumet le milieu ainsi obtenu à un traitement thermique à une température au moins égale à la température d'ébullition dudit milieu.

Le phosphate de l'invention est préparé par un procédé simple et il présente des propriétés d'application similaire à celles des produits exfoliés.

L'invention concerne aussi l'utilisation du phosphate de zirconium selon l'invention pour la préparation d'un phosphate de zirconium et de sodium pentahydraté, pour la préparation d'un phosphate de zirconium à structure exfoliée et pour la préparation d'une composition à base d'un matériau macromoléculaire.

D'autres caractéristiques, détails et avantages de l'invention apparaîtront encore plus complètement à la lecture de la description qui va suivre, ainsi que des dessins annexés dans lesquels :
- la figure 1 est une photo obtenue par Microscopie Electronique à Transmission (MET) d'un produit selon l'invention;
- la figure 2 est un diagramme RX de produits selon l'invention et d'un produit comparatif.

Le produit de l'invention est un phosphate de zirconium, qui répond plus particulièrement à la formule chimique Zr(HPO₄)₂. Il est à noter que certains des atomes d'hydrogène peuvent être substitués par des atomes de sodium. Il faut noter aussi que le phosphate de zirconium de l'invention peut contenir de l'hafnium dans une quantité massique qui peut être de l'ordre de 1 à 2% massique par rapport au phosphate de zirconium. Cet hafnium provient généralement des matières premières utilisées pour les composés de zirconium mis en oeuvre dans le procédé de préparation du phosphate de l'invention. Enfin, ce phosphate peut être anhydre ou hydraté.

Le zirconium peut être partiellement substitué par un autre élément tétravalent comme le titane, le cérium et l'étain, par exemple dans une proportion pouvant aller jusqu'à 0,2% molaire (rapport molaire substituant/zirconium).

La première caractéristique du phosphate de l'invention est d'être cristallisé. Cette caractéristique peut être mise en évidence par le diagramme RX du produit. Plus précisément, on peut identifier sur le diagramme RX au moins 2 pics correspondant, le premier, au plan (002) et, le second, qui est un doublet, aux plans (-113) et (202). En outre le rapport de la surface du pic du plan (002) à celle du doublet des plans (-113) et (202) est supérieur à 1. On sait que ce rapport est inférieur à 1 dans le cas d'un phosphate de zirconium connu de structure monoclinique. Cela signifie que le phosphate de l'invention présente une structure cristalline qui est intermédiaire entre la structure monoclinique et la structure hexagonale.

L'autre caractéristique du phosphate de l'invention est la structure ou morphologie des particules qui le constituent. Plus précisément, ces particules se présentent sous forme de plaquettes de faible épaisseur. Cette morphologie peut être mise en évidence par Microscopie Electronique à Balayage (MEB). En outre l'analyse au Microscope Electronique à Transmission (MET) permet par une méthode de mesure par inclusion dans une résine de montrer que ces particules présentent une épaisseur d'au plus 30 nm, plus particulièrement d'au plus 20 nm et qui peut être comprise par exemple entre 1 nm et 20 nm. Les mêmes valeurs d'épaisseur peuvent être obtenues à partir du diagramme RX par mesure de la taille de cristallites perpendiculairement au plan (002).

Les plaquettes qui constituent les particules sont elles-mêmes formées de feuillets superposés dont l'épaisseur est de l'ordre de quelques angströms (5 à 7 Å), l'espace entre les feuillets pouvant être de l'ordre de 7 à 8 Å. Ces valeurs peuvent aussi être obtenues par analyse RX.

Par ailleurs, ces particules ont une taille qui peut être comprise entre environ 0,1 µm et environ 2 µm, plus particulièrement entre 0,2 µm et 0,5 µm, cette taille étant déterminée par analyse MET. Cette taille correspond en fait ici à la plus grande dimension des particules, c'est à dire à leur longueur.

Du fait de sa morphologie en plaquettes d'épaisseur faible, le facteur de forme des particules (rapport longueur/épaisseur) est élevé. On peut noter aussi ici que l'intensité élevée du pic du plan (002) par rapport à celle du doublet, caractéristique qui a été évoquée plus haut, traduit la croissance privilégiée des cristallites dans ce plan (002) et donc la morphologie en plaquette et le facteur de forme élevé.

Enfin, l'analyse des photos MET montre que dans leur très grande majorité les particules sont développées dans un plan sensiblement horizontal ou, en d'autres termes, on ne voit que très peu de particules.repliées sur elles-mêmes. Ceci indique une grande rigidité des particules.

Le procédé de préparation du phosphate de l'invention va maintenant être décrit.

Comme indiqué plus haut, ce procédé comprend une première étape dans laquelle on met en présence en milieu acide de l'acide phosphorique et un composé du zirconium.

Comme composés de zirconium de départ, on peut mentionner les tetra-halogénures de zirconium, les oxyhalogénures de zirconium, en particulier l'oxychlorure de zirconium.

La mise en présence de l'acide phosphorique et du composé du zirconium entraîne une précipitation.

Un bilan de la réaction de précipitation, simplifié, est par exemple le suivant:

2 H₃PO₄ + ZrOCl2 → Zr(H⁺, PO₄³⁻)₂ + 2 HCl

La précipitation est de préférence réalisée en milieu aqueux. L'utilisation de l'acide phosphorique induit une acidité du milieu de précipitation. On peut avantageusement réaliser la précipitation à pH acide, de préférence contrôlé, par exemple compris entre 0,5 et 2. On peut utiliser à cet effet un autre acide, en complément de l'acide phosphorique. On peut citer à titre d'exemple l'acide chlorhydrique. On peut noter que l'utilisation d'acide fluorhydrique n'est pas nécessaire ici.

A l'issue de cette première étape du procédé le précipité est séparé du milieu réactionnel par tout moyen convenable. On peut procéder avantageusement à un lavage, notamment au moins par une solution aqueuse d'acide phosphorique.

La deuxième étape du procédé consiste à mettre en suspension le précipité dans une solution d'acide phosphorique. Cette solution doit présenter une concentration en acide d'au plus 6M, plus particulièrement d'au plus 5,5M. Cette concentration est de préférence supérieure à 2,5M et elle peut être plus particulièrement comprise entre 3M et 4M. Dans cette dernière gamme de concentration les particules sont moins agglomérées et les séparations solide/liquide se font plus facilement lors de la mise en oeuvre du procédé.

Dans une troisième étape, on soumet la dispersion obtenue à un traitement thermique. Ce traitement se fait à une température qui est au moins égale à la température .d'ébullition du milieu qui subit le traitement. La température doit être suffisamment élevée pour permettre d'obtenir le produit de l'invention avec la structure cristalline décrite ci-dessus. Généralement, mais ceci n'est pas une condition absolument nécessaire, la température à laquelle se déroule le traitement thermique est d'autant plus élevée que la concentration en acide est faible. Il est préférable pour les basses concentrations en acide phosphorique, par exemple pour celles d'au plus 4M et inférieures à 4M, que cette température soit supérieure à la température d'ébullition.

Plus particulièrement, cette température du traitement thermique est d'au moins 120°C. Elle peut être comprise par exemple entre 120°C et 170°C, cette valeur supérieure n'étant pas critique mais essentiellement limitée par des contraintes économiques ou d'appareillage.

L'opération de traitement thermique peut être conduite sous reflux lorsque la température à laquelle se fait le traitement est égale à la température d'ébullition du milieu ou se situe au voisinage de celle-ci. Pour les températures plus élevées, le traitement peut se faire en introduisant la suspension liquide dans une enceinte close (réacteur fermé du type autoclave). Dans les conditions de températures données ci-dessus, et en milieu aqueux, on peut préciser, à titre illustratif, que la pression dans le réacteur fermé peut varier entre une valeur supérieure à 1 Bar (10⁵ Pa) et 20 Bar (2. 10⁶ Pa), de préférence entre 2 Bar (2. 10⁵ Pa) et 6 Bar (6. 10⁵ Pa).

Le traitement thermique est généralement conduit sous air.

La durée du traitement thermique peut varier dans de larges limites, par exemple entre 1 et 8 heures, de préférence entre 4 et 5 heures.

A l'issue du traitement thermique, on obtient le phosphate de zirconium selon l'invention qui se présente alors sous la forme d'une suspension ou dispersion dans l'eau. Toutefois, plusieurs variantes du procédé peuvent être mises en oeuvre à ce stade.

La première variante consiste à séparer le solide du milieu liquide par tout moyen convenable. On obtient alors le produit sous une forme solide. Il est possible de laver le solide obtenu et de le redisperser dans l'eau pour obtenir une suspension purifiée.

Selon une autre variante, il est possible de transférer la dispersion directement issue du traitement thermique ou la dispersion issue du lavage dans un mélange eau/éthylène-glycol et d'éliminer éventuellement l'eau par exemple par distillation.

Selon une troisième variante, il est possible d'ajouter à la dispersion directement issue du traitement thermique ou à la dispersion issue du lavage un monomère ou un oligomère de PET ou du PEG.

Dans le cadre d'une quatrième variante, on peut ajouter un composé du sodium à la dispersion directement issue du traitement thermique ou à la dispersion issue du lavage. Ce composé peut être plus particulièrement de l'hydroxyde de sodium.

L'addition de ce composé de sodium permet une substitution partielle des protons H⁺ présents dans le phosphate cristallisé par les cations Na⁺. Dans le cas de la présente variante on utilise une quantité du composé de sodium telle que le rapport atomique cation Na⁺ (apporté par le composé du sodium)/P soit de 0,5. On obtient ainsi un phosphate de zirconium et de sodium pentahydraté de formule ZrNaH(PO₄)₂.5H₂O.

Une cinquième variante peut être enfin mise en oeuvre en vue de conduire à un phosphate à structure exfoliée. Cette cinquième variante est similaire dans sa première partie à la quatrième variante dans la mesure où l'on ajoute, la encore, un composé du sodium à la dispersion directement issue du traitement thermique ou à la dispersion issue du lavage. Cette variante se distingue toutefois de la précédente par le fait que le rapport atomique Na/P est supérieur à 0,5 et qu'elle comprend une étape supplémentaire.

Plus précisément en effet, on utilise une quantité du composé de sodium telle que le rapport atomique cation Na⁺ (apporté par le composé du sodium)/P soit supérieur à 0,5, de préférence au moins égal à 0,7 et encore plus préférentiellement d'au moins 0,8.

L'addition du composé de sodium dans les quantités données ci-dessus a pour effet de modifier le pH de la dispersion de départ jusqu'à une valeur qui, généralement, est d'au moins 7, plus particulièrement d'au moins 8 et encore plus particulièrement d'au moins 9.

La dernière étape de cette cinquième variante consiste à introduire un acide dans le milieu obtenu à l'issue de l'étape précédente. L'acide est généralement un acide inorganique qui peut être choisi parmi l'acide chlorhydrique, l'acide sulfurique, l'acide nitrique et l'acide phosphorique.

L'addition de l'acide peut conduire soit directement à un gel, qui est le phosphate de zirconium à structure exfoliée, soit à un composé solide qui est obtenu en suspension dans le milieu réactionnel. Dans ce dernier cas, ce composé est séparé du milieu réactionnel puis remis dans l'eau. Après cette remise dans l'eau on observe la formation d'un gel qui correspond au phosphate de zirconium à structure exfoliée.

La manière dont peut se dérouler cette dernière étape, c'est à dire l'accès direct au gel ou le passage par un composé solide peut dépendre de la nature de l'acide utilisé. Elle peut aussi dépendre de la concentration en phosphate de zirconium et de sodium de la dispersion utilisée au début de l'étape. A titre d'exemple, en dessous d'une concentration d'environ 10g/l, on peut obtenir directement le gel. Ainsi, l'utilisation de l'acide chlorhydrique à partir d'une dispersion diluée peut conduire directement au gel.

L'addition de l'acide se fait généralement de manière à descendre le pH du milieu à une valeur d'au plus 3, plus particulièrement à un pH d'environ 2 ou d'au plus 2.

Un lavage du gel peut être effectué par centrifugation de celui-ci puis remise en dispersion du produit obtenu. Cette opération peut être répétée plusieurs fois. On obtient à l'issue de ce lavage un gel qui, en fonction du nombre de lavages effectués, peut présenter un pH d'au plus 4, par exemple compris entre 3 et 4.

Le phosphate de zirconium à structure exfoliée obtenu par cette variante se caractérise par sa pureté en composés organiques. Ainsi, il présente une teneur en composés organiques qui est d'au plus 1000ppm, plus particulièrement d'au plus 500ppm. Cette teneur peut être encore plus particulièrement d'au plus 300ppm. On entend par « composés organiques » tout composé contenant du carbone et notamment tout composé du type agent de gonflement mentionné plus haut.

La teneur mentionnée ci-dessus est exprimée en masse de carbone par rapport au phosphate de zirconium à l'état sec. Cette teneur est déterminée par une analyse qui consiste à oxyder le produit en présence d'un catalyseur dans un four à induction sous balayage d'oxygène. La détection du carbone se fait par détection puis intégration du pic CO₂ (dosage infra-rouge). Cette analyse peut être faite avec un appareil de la société LECO de référence CS-044. Dans ce cas, le catalyseur utilisé peut être le LECOCEL de la société LECO réf 763-266-PL additionné aux étalons et aux échantillons à analyser (environ 3 g) ou le produit réf 502-231 (High purity Iron chip accelerator) de la même société (environ 1,2g par mesure) additionné aux échantillons.

Les phosphates présentant les caractéristiques données ci-dessus ou obtenus par le procédé tel que décrit ci-dessus peuvent être utilisés dans la préparation de compositions à base de matériaux macromoléculaires.

Le matériau macromoléculaire peut être de différentes natures : élastomérique, thermoplastique, thermodurcissable.

Le matériau macromoléculaire peut être plus particulièrement un polymère thermoplastique. A titre d'exemple de polymères pouvant convenir, on peut citer : les polylactones telles que la poly(pivalolactone), la poly(caprolactone) et les polymères de la même famille; les polyuréthanes obtenus par réaction entre des diisocyanates comme le 1,5-naphtalène diisocyanate; le p-phénylène diisocyanate, le m-phénylène diisocyanate, le 2,4-toluène diisocyanate, le 4,4'-diphénylméthane diisocyanate, le 3,3'-diméthyl-4,4'-diphényl-méthane diisocyanate, le 3,3-'diméthyl-4,4'-biphényl diisocyanate, le 4,4'-diphénylisopropylidène diisocyanate, le 3,3'-diméthyl-4,4'-diphényl diisocyanate, le 3,3'-diméthyl-4,4'-diphénylméthane diisocyanate, le 3,3'-diméthoxy-4,4'-biphényl diisocyanate, le dianisidine diisocyanate, le toluidine diisocyanate, l'héxaméthylène diisocyanate, le 4,4'-diisocyanatodiphénylméthane et les composés de la même famille et les diols à longues chaînes linéaires comme le poly(tétraméthylène adipate), le poly(éthylène adipate), le poly(1,4 -butylène adipate), le poly(éthylène succinate), le poly(2,3-butylène succinate), les polyéther diols et composés de la même famille; les polycarbonates comme le poly[méthane bis(4-phényl) carbonate], le poly[1,1-éther bis(4-phényl) carbonate], le poly[diphénylméthane bis(4-phényl)carbonate], le poly[1,1-cyclohexane bis(4-phényl)carbonate] et les polymères de la même famille; les polysulfones; les polyéthers; les polycétones; les polyamides comme le poly(4-amino butyrique acide), le poly(héxaméthylène adipamide), le poly(acide 6-aminohéxanoïque), le poly(m-xylylène adipamide), le poly(p-xylylène sébacamide), le poly(2,2,2-triméthyl héxaméthylène téréphtalamide), le poly(métaphénylène isophtalamide), le poly(p-phénylène téréphtalamide), le poly(acide 12-aminododécanoïque), le poly(acide 11-aminoundodécanoïque) et les (co)polymères de la même famille; les polyesters comme le poly(éthylène azélate), le poly(éthylène-1,5-naphtalate, le poly(1,4-cyclohexane diméthylène téréphtalate), le poly(éthylène oxybenzoate), le poly(para-hydroxy benzoate), le poly(1,4-cyclohéxylidène diméthylène téréphtalate), le poly(1,4-cyclohéxylidène diméthylène téréphtalate), le polyéthylène téréphtalate, le polybutylène téréphtalate et les polymères de la même famille; les poly(arylène oxydes) comme le poly(2,6-diméthyl-1,4-phénylène oxyde), le poly(2,6-diphényl-1,4-phénylène oxyde) et les polymères de la même famille; les poly(arylène sulfides) comme le poly(phénylène sulfide) et les polymères de la même famille; les polyétherimides; les polymères vinyliques et leurs copolymères comme l'acétate de polyvinyle, l'alcool polyvinylique, le chlorure de polyvinyle; le polyvinyle butyral, le chlorure de polyvinylidène, les copolymères éthylène-acétate de vinyle, et les polymères de la même famille; les polymères acryliques, les polyacrylates est leurs copolymèrés comme l'acrylate de polyéthyle, le poly(n-butyl acrylate), le polyméthylméthacrylate, le polyéthyl méthacrylate, le poly(n-butyl méthacrylate), le poly(n-propyl méthacrylate), le polyacrylamide, le polyacrylonitrile, le poly(acide acrylique), les copolymères éthylène-acide acrylique, les copolymères éthylène-alcool vinylique, les copolymères de l'acrylonitrile, les copolymères méthacrylate de méthylestyrène, les copolymères éthylène-acrylate d'éthyle, les copolymères méthacrylate-butadiène-styrène, l'ABS, et les polymères de la même famille; les polyoléfines comme le poly(éthylène) basse densité, le poly(propylène), le poly(éthylène) chloré basse densité, le poly(4-méthyl-1-pentène), le poly(éthylène), le poly(styrène), et les polymères de la même famille; les ionomères; les poly(épichlorohydrines); les poly(uréthane) tels que produits de polymérisation de diols comme la glycérine, le triméthylol-propane, le 1,2,6-hexanetriol, le sorbitol, le pentaérythritol, les polyéther polyols, les polyester polyols et les composés de la même famille avec des polyisocyanates comme le 2,4-tolylène diisocyanate, le 2,6-tolylène diisocyanate, le 4,4'-diphénylméthane diisocyanate, le 1,6-héxaméthylène diisocyanate, le 4,4'-dicycohéxylméthane diisocyanate et les composés de la même famille; et les polysulfones telles que les produits de réaction entre un sel de sodium du 2,2-bis(4-hydroxyphényl) propane et de la 4,4'-dichlorodiphényl sulfone; les résines furane comme le poly(furane); les plastiques cellulose-ester comme l'acétate de cellulose, l'acétate-butyrate de cellulose, le propionate de cellulose et les polymères de la même famille; les silicones comme le poly(diméthyl siloxane), le poly(diméthyl siloxane co-phénylméthyl siloxane), et les polymères de la même famille; les mélanges d'au moins deux des polymères précédents.

Parmi ces polymères thermoplastiques, on préfère tout particulièrement les polyamides, tels que le polyamide 6, le polyamide 66, le polyamide 12, le polyamide 11, les polyamides semi-aromatiques, le PVC, le PET, le PPO et les mélanges et les copolymères à base de ces polymères.

Toute méthode permettant d'obtenir une dispersion de composés dans un matériau macromoléculaire peut être mise en oeuvre, pour utiliser les phosphates de l'invention. Un premier procédé consiste à mélanger un phosphate dans un matériau thermoplastique sous forme fondue et à éventuellement soumettre le mélange à un cisaillement important, par exemple dans un dispositif d'extrusion bi-vis, afin de réaliser une bonne dispersion. Un autre procédé consiste à mélanger un phosphate à disperser aux monomères dans le milieu de polymérisation, puis à effectuer la polymérisation. Un autre procédé consiste à mélanger à un polymère thermoplastique sous forme fondue, un mélange concentré d'un polymère thermoplastique et d'un phosphate.

Il n'y a pas de limitation à la forme sous laquelle le phosphate est introduit dans le milieu de synthèse du matériau macromoléculaire, ou dans le matériau macromoléculaire thermoplastique fondu. Il peut par exemple être introduit sous forme de poudre solide ou sous forme d'une dispersion dans de l'eau ou dans un dispersant organique.

La proportion en poids du phosphate dans la composition à base d'un matériau macromoléculaire est de préférence inférieure ou égale à 5 %.

Les phosphates de l'invention peuvent être utilisés plus particulièrement dans le cas où le matériau macromoléculaire est un latex.

Les latex sont des dispersions aqueuses de particules de polymères issues de procédés classiques de (co)polymérisation en émulsion de monomères organiques polymérisables.

Ces monomères organiques peuvent être choisis par exemple parmi :
a) : les (méth)acrylate d'alkyle dont la partie alkyle comporte de préférence de 1 à 18 atomes de carbone, en particulier l'acrylate de méthyle, l'acrylate d'éthyle, l'acrylate de propyle, l'acrylate de n-butyle, l'acrylate d'isobutyle, l'acrylate d'amyle, l'acrylate de lauryle, l'acrylate d'isoamyle, l'acryle de (2 éthyl-2 hexyle), l'acrylate d'octyle, le méthacrylate de méthyle, le méthacrylate de chloroéthyle, le méthacrylate de butyle, le méthacrylate de (diméthyl-3,3 butyle), le méthacrylate d'éthyle, le méthacrylate d'isobutyle, le méthacrylate d'isopropyle, le méthacrylate de phényle, le chloroacrylate de butyle, le chloroacrylate de méthyle, le chloroacrylate d'éthyle, le chloroacrylate d'isopropyle, le chloroacrylate de cyclohexyle;
b): les esters alpha,beta-éthylèniquement insaturés d'acides monocarboxyliques dont la partie acide est non polymérisable et dont la partie insaturée comporte de préférence 2 à 14 atomes de carbone et la partie acide de 2 à 12 atomes de carbone, en particulier l'acétate de vinyle, le propionate de vinyle, le butyrate de vinyle, l'acétate d'allyle, le versatate de vinyle (marque déposée pour des esters d'acides alpha-ramifiés en C₉-C₁₁), le laurate de vinyle, le benzoate de vinyle, le triméthylacétate de vinyle, le pivilate de vinyle et le trichloroacétate de vinyle;
c): les esters et les hemi-esters d'acides polycarboxyliques alpha,beta-éthyléniquement insaturés ayant de 4 à 24 atomes de carbone, en particulier le fumarate de diméthyle, le maléate de diéthyle, le fumarate de méthyle et d'éthyle, le fumarate d'(éthyl-2 hexyle);
d): les halogénures vinyliques en particulier le chlorure de vinyle, le fluorure vinyle, le chlorure de vinylidène, le fluorure de vinylidène;
e): les vinyl aromatiques présentant de préférence au plus 24 atomes de carbone et choisis en particulier parmi le styrène, l'alpha-méthylstyrène, le 4-méthylstyrène, le 2- méthylstyrène, le 3-méthylstyrène, le 4-méthoxystyrène, le 2-hydroxyméthylstyrène, le 4-éthylstyrène, le 4-éthoxystyrène, le 3,4 diméthylsiyrène, le 2-chlorostyrène, le chlorostyrène, le 4-chloro-3 méthylstyrène, le 4-tert-butylstyrène, le 4-dichlorostyrène, le 2,6-dichlorostyrène, le 2,5-difluorostyrène, et le 1-vinylnaphtalène;
f): les diènes aliphatiques conjugués présentant de préférence de 3 à 12 atomes de carbones en particulier le 1,3-butadiène, l'isoprène et le 2- chloro-1,3 butadiène ;
g): les nitriles alpha,beta-éthyléniquement insaturés ayant de préférence de 3 à 6 atomes de carbone tel que l'acrylonitrile et le méthacrylonitrile.On peut citer aussi les latex homopolymères, notamment les latex polyacétate de vinyle.

Il est aussi possible d'utiliser des copolymères de certains des monomères principaux précités avec jusqu'à 50% en poids d'autres isomères à caractère ionique en particulier:
- un monomère acide carboxylique alpha, beta-éthyléniquement insaturé mentionné dessus incluant les acides mono et polycarboxyliques (acide acrylique, méthacrylique, maléique, itaconique, fumarique)
- un monomère éthylénique comportant des groupes amines secondaires, tertiaires ou quaternisées (vinyl-pirydines, diéthylaminoéthylméthacrylate),
- un monomère éthylénique sulfoné (vinylsulfonate, styrène-sulfonate),
- un monomère éthylénique Zwitterionique (acrylate de sulfopropyl-(diméthylaminopropyle),
   ou à caractère non-ionique en particulier les amides d'acides carboxyliques insaturés (l'acrylamide, le méthacrylamide),
- les esters de (méth)acrylates et d'alcools polyhydroxypropyles ou polyhydroxyéthylés.

On peut mentionner plus particulièrement les copolymères du styrène avec les acrylates et les copolymères styrène-butadiène.

On notera enfin ici que dans le cas des latex, l'introduction du phosphate de l'invention peut aussi se faire par simple mélange sous agitation du phosphate avec le latex.

L'incorporation des phosphates de zirconium de l'invention dans les compositions à base de matériaux macromoléculaires permet d'améliorer notamment les propriétés barrière aux gaz, en particulier à la vapeur d'eau, de ceux-ci ainsi que leurs propriétés mécaniques comme la rigidité en température.

Les produits de l'invention peuvent aussi être utilisés comme épaississants dans des milieux aqueux ou organiques pour donner des effets de viscosité, notamment en milieux agressifs, par exemple très acides. On peut penser à la gélification de produits détergents.

Des exemples vont maintenant être donnés.

Dans ces exemples, on utilise les réactifs suivants :
Acide chlorhydrique (Prolabo 36 %, d 1,19)
Acide phosphorique (Prolabo 85 % d = 1,695)
Eau désionisée
Oxychlorure de zirconium (sous forme de poudre) à 32,8 % en ZrO₂.

Pour caractériser les produits, on effectue une analyse RX avec un diffractomètre PW1700, équipé de fentes fixes et d'une anode au cuivre (λₘ = 1,5418 Å).

Les conditions opératoires sont de 5° à 70° (degrés 2θ), avec un pas de 0,020° et un temps de 1 seconde par pas.

La surface BET indiquée est celle déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

Les photos MET sont obtenues en mettant en oeuvre la technique suivante. On verse le produit à analyser sous forme de poudre dans un mélange contenant les composés nécessaires pour obtenir une résine époxyde. On laisse polymériser en montant la température du mélange à 60°C et en le maintenant à cette température pendant 48 heures. On réalise ensuite à partir du bloc obtenu des coupes de 60 à 80 nm d'épaisseur en utilisant un ultramicrotome à couteaux de diamant avec un bac de récupération d'eau. Les coupes récupérées sur des grilles en cuivre recouvertes d'un film de collodion carboné sont ensuite examinées au microscope électronique.

### EXEMPLE 1

Cet exemple décrit la préparation d'un produit selon l'invention. Cette préparation comporte trois étapes.

### Première étape : précipitation

On prépare au préalable une solution aqueuse d'oxychlorure de zirconium à 2,1 moles par litre en ZrO₂.

Dans un réacteur agité de 500 ml on ajoute à température ambiante les solutions suivantes :
Acide chlorhydrique : 50 ml
Acide phosphorique : 50 ml
Eau désionisée : 150 ml

Après agitation du mélange on ajoute de façon continue 140 ml de la solution aqueuse d'oxychlorure de zirconium à 2,1 M.

L'agitation est maintenue pendant 1 heure après la fin de l'addition de la solution d'oxychlorure de zirconium.

### Deuxième étape : lavage

Après élimination des eaux mères on lave le précipité avec 1,2 l de H₃PO₄ à 20 g/l puis avec 4 litres d'eau désionisée. On obtient un précipité à base de phosphate de zirconium. On sèche à 50°C pendant 15 heures et on récupère environ 90 g de produit.

### Troisième étape : cristallisation

Cette troisième étape permet d'obtenir un produit selon l'invention.

Une partie du précipité précédent (60g) est dispersée dans 230,6 g d'acide phosphorique à 85 % et 524,9 g d'eau (soit une concentration en acide de 3 moles/litre), la dispersion ainsi obtenue est transférée dans un autoclave de 1 litre puis chauffée jusqu'à une température de 150 °C. Cette température est maintenue pendant 5 heures.

La dispersion obtenue est lavée à l'eau désionisée. Le gâteau issu de la dernière centrifugation est redispersé de façon à obtenir un extrait sec de 10 % environ, le pH de la dispersion est de 2,6.

On obtient une dispersion d'un composé cristallisé à base de phosphate de zirconium selon l'invention, dont les caractéristiques sont les suivantes.

L'analyse au microscope à transmission électronique (MET) met en évidence des particules de taille comprise entre 150 et 400 nm.

L'analyse RX indique notamment par l'intensité élevée du pic du plan (002) par rapport à celle du doublet des plans (-113) et (202) une croissance privilégiée des particules dans ce plan (002) et donc la forme en plaquette. L'épaisseur de la particule mesurée perpendiculairement au plan (002) est de 18 nm. La distance mesurée entre les feuillets constitutifs des plaquettes est de 7,5 Å.

L'extrait sec est de 10,4 %.

La surface spécifique mesurée en BET est de 37 m²/g.

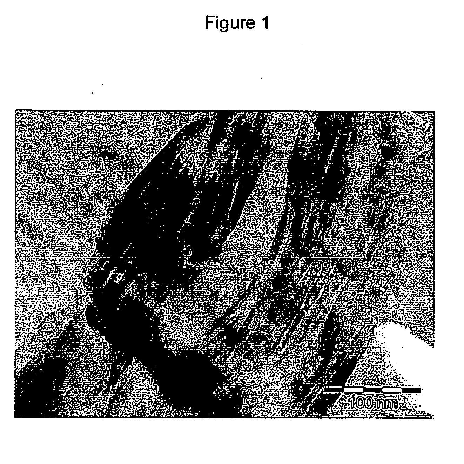

La figure 1 est une photo obtenue par MET du produit selon l'exemple.

### EXEMPLE 2

On procède comme dans l'exemple 1 et avec les mêmes réactifs pour les deux premières étapes.

La dernière étape de cristallisation est conduite ensuite de la manière suivante.

Le gâteau issu de l'étape de lavage est dispersé dans 700 g d'acide phosphorique à 85 % et 588 g d'eau (soit une concentration en acide de 5,4 moles/litre), la dispersion ainsi obtenue est transférée dans un réacteur de 2 litres puis chauffée jusqu'à une température de 105 °C. Cette température est maintenue pendant 5 heures.

La dispersion obtenue est lavée à l'eau désionisée. Le gâteau issu de la dernière centrifugation est redispersé de façon à obtenir un extrait sec de 158%, le pH de la dispersion est de 3 et la conductivité de 0,28 m.S/cm.

On obtient une dispersion d'un composé cristallisé à base de phosphate de zirconium selon l'invention, dont les caractéristiques sont les suivantes.

L'épaisseur de la plaquette constituant la particule est de 15 nm. La distance mesurée entre les feuillets constitutifs des plaquettes est de 7,5 Å.

L'analyse MET met en évidence des particules de forme hexagonale avec une taille comprise entre 150 à 500 nm environ.

### EXEMPLE 3 COMPARATIF

Cet exemple décrit un procédé de préparation dans lequel on ne procède pas selon les conditions de l'invention en ce qui concerne la concentration en acide phosphorique lors de la dernière étape.

On procède comme dans l'exemple 1 et avec les mêmes réactifs pour les deux premières étapes.

La dernière étape de cristallisation est conduite ensuite de la manière suivante.

96 g du gâteau issu de l'étape de lavage sont dispersés dans 1 litre de solution aqueuse d'acide phosphorique 8,8 M, la dispersion ainsi obtenue est transférée dans un réacteur de 2 litres puis chauffée à 114 C. Cette température est maintenue pendant 5 heures.

La dispersion obtenue est lavée jusqu'à une conductivité inférieure à 1mS (surnageant). Le gâteau issu de la dernière centrifugation est redispersé de façon à obtenir un extrait sec voisin de 20 %, le pH de la dispersion est de 2,5.

On obtient une dispersion d'un composé cristallisé à base de phosphate de zirconium selon l'invention, dont les caractéristiques sont les suivantes.

L'analyse MET met en évidence des particules de taille comprise entre 100 et 200 nm et de taille moyenne de 140 nm. L'épaisseur de la plaquette constituant la particule est de 50 nm. La distance mesurée entre les feuillets constitutifs des plaquettes est de 7,5 Å.

Le diagramme RX montre une dissociation des pics des plans (-113) et (202) et la surface du pic du plan (002) est inférieure à la surface totale des pics des plans (-113) et (202).

L'extrait sec est de 18,1 % (en poids).

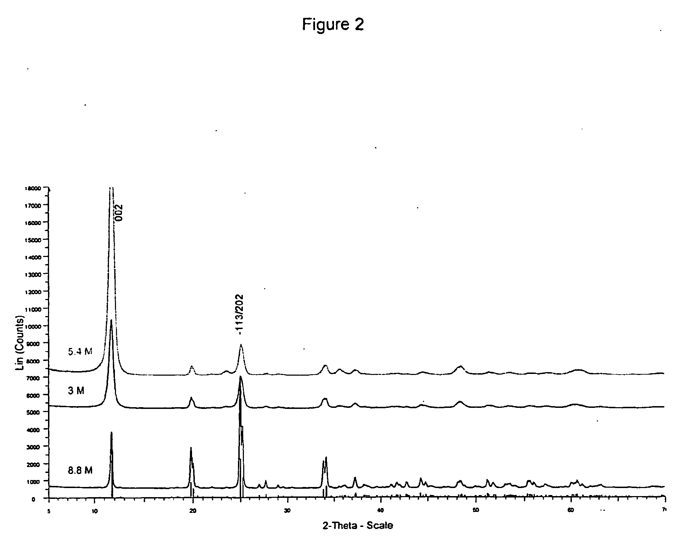

La figure 2 donne les diagrammes RX des produits selon les exemples 1, 2 et 3 qui correspondent respectivement aux courbes avec les références 3M, 5M et 8,8M.

### EXEMPLE 4

Cet exemple décrit l'utilisation d'un produit de l'invention dans un polymère (PET).

Dans un réacteur de polymérisation de 7,5 litres, permettant d'obtenir environ 3 kg de polymère par polycondensation, muni d'une agitation dont le couple d'entraînement est contrôlé pour suivre la viscosité du milieu réactionnel, d'une colonne de distillation pour éliminer l'eau formée lors de l'estérification, ainsi que l'excès d'éthylène glycol, et d'un circuit de vide direct pour l'étape de polycondensation, on introduit :
2854,5 g d'acide téréphtalique
67,2 g d'acide isophtalique
1309,0 g d'éthylène glycol
33,79 g du phosphate de zirconium sous forme d'une dispersion dans de l'eau tel qu'obtenu à l'issue du procédé décrit dans l'exemple 1.

Après une purge à l'azote, le milieu réactionnel est chauffé à 275°C sous agitation et sous pression absolue de 6,6 bars.

Le temps d'estérification est de 60 minutes. La pression est ensuite ramenée à la pression atmosphérique en 20 minutes.

On introduit une solution d'oxyde d'antimoine dans le milieu réactionnel.

La pression est maintenue pendant 20 minutes à pression atmosphérique, avant une mise sous vide progressive de 1 bar à moins de 1 mm de mercure en 90 minutes.

La masse réactionnelle est portée à 285 °C lorsque la pression descend en dessous de 1 mm de mercure.

On définit le temps de polycondensation comme le temps nécessaire pour atteindre le niveau de viscosité visé à partir du moment où la pression est inférieure à 1 mm de mercure.

Une fois le niveau de viscosité atteint, l'agitation est arrêtée et le réacteur est mis sous une pression de 3 bars. Le polymère obtenu est coulé à travers une filière pour réaliser un jonc qui est débité sous forme de granulés.

Les caractéristiques finales du PET sont données ci-dessous :

**Tableau 1**

| | |
|---|---|
| Taux de cendres | 0.9 |
| Indice de viscosité | 77 |
| Coloration | |
| L* | 70 |
| a* | 1,9 |
| b* | 9 |

Les caractéristiques qui figurent dans le tableau 1 ont été mesurées de la manière suivante :
Indice de viscosité (en ml/g) : mesure selon la norme ISO 1628/5: mesure dans une solution de la composition à 0,5 % dans un mélange phénol/orthodichlorobenzène 50/50 en poids, à 25°C. La concentration en polymère utilisée pour le calcul de l'indice de viscosité est la concentration réelle en polymère, tenant compte du taux de particules présent dans la composition.
Coloration selon le système CIE lab : mesure de L*, a*, b*

Afin de vérifier la processabilité et l'aspect d'une préforme obtenue avec le matériau de cet exemple, le polymère a été injecté sur une machine LX 160T ayant une vis de 42 mm avec un moule double cavités.

La préforme obtenue est transparente.

### EXEMPLE 5

Cet exemple décrit l'utilisation d'un produit de l'invention dans un autre polymère de type polyamide.

On synthétise deux polyamides 6 ayant un indice de viscosité respectivement de 134 ml/g et 216 ml/g mesurés dans l'acide formique (Norme ISO EN 307) à partir de caprolactame selon un procédé classique. Ces polyamides 6 sont appelés matériaux A et A'. Les granulés obtenus sont appelés granulés A et A'.

On synthétise également deux polyamides 6 ayant un indice de viscosité de 130 ml/g et 210 ml/g mesurés dans l'acide formique (Norme ISO EN 307) à partir de caprolactame selon un procédé classique, en introduisant dans le milieu de polymérisation une dispersion aqueuse de phosphate de zirconium selon l'invention, cette dispersion ayant été obtenue à l'issue du procédé décrit dans l'exemple 1. On introduit ainsi 2 % en poids de phosphate de zirconium par rapport au poids total du polyamide.

Après polymérisation, les différents polymères sont mis sous forme de granulés. Les granulés B proviennent du polyamide 6 d'indice de viscosité 130 ml/g, matériau B. Les granulés C proviennent du polyamide 6 d'indice de viscosité 210 ml/g, matériau C. Les granulés sont lavés pour éliminer le caprolactame résiduel. Dans ce but, les granulés sont immergés dans de l'eau à ébullition pendant deux fois 8 heures, puis sont séchés sous vide primaire (< 0,5 mbar) pendant 16 heures à 110°C.

Des éprouvettes sont fabriquées à partir des granulés A et B. Les éprouvettes ont une largeur de 10 mm, une longueur de 80 mm et une épaisseur de 4 mm. Les éprouvettes sont conditionnées à 28°C et à 0 % d'humidité relative.

Différents tests ont été réalisés sur les éprouvettes selon les méthodes de mesure indiquées ci-dessous pour déterminer les propriétés mécaniques des matériaux :
- le module de traction est mesuré sur un appareil ZWICK Z020, capteur de force : 20 kN et une distance entre mâchoires de 400 mm. Les mesures réalisées sont présentées dans le tableau 2 ci-dessous.

**Tableau 2**

| Echantillons | Module traction (MPa) | Contrainte au seuil (MPa) |
|---|---|---|
| Matériau A (PA 6) | 2383 | 78,4 |
| Matériau B | 3091 | 80,7 |

On voit que le matériau B qui correspond à un polymère chargé en produit selon l'invention présente des propriétés mécaniques améliorées.

Les granulés de polymère obtenus plus haut sont mis en forme par extrusion sur un appareillage de marque CMP.

Les caractéristiques de la mise en oeuvre sont les suivantes :
- température de l'extrudeuse : entre 260 et 290°C
- vitesse de vis : 36 rpm
- couple moteur : 8-10 Ampères
- vitesse de tirage variable (épaisseurs de film entre 50 et 70 µm) Plusieurs films ont été obtenus ayant une épaisseur de 50 à 70 µm.

Les films sont conditionnés 48 heures à 23°C, la RH (humidité relative) allant de 0% à 50% avant d'être soumis à la détermination de leur perméabilité à l'oxygène selon la procédure décrites ci-dessous :
On mesure le coefficient de transmission de l'oxygène selon la norme ASTM D3985 dans les conditions particulières suivantes.

Conditions de mesure :
- Température : 23°C
- Humidité : 0%, 50 % RH
- Mesures avec 100 % d'oxygène sur 3 éprouvettes de 0,5 dm²
- Temps de stabilisation : 24 h
- Appareil de mesure : Oxtran 2/20

**Tableau 3**

| Granulés de départ | granulés A' (PA 6) | granulés C |
|---|---|---|
| Perméabilité O₂ - 0% RH (cm³.mm/m².24h.bar) | 0,96 | 0,37 |
| Perméabilité O₂ - 50% RH (cm³.mm/m².24h.bar) | 0,6 | 0,3 |

On voit que les films obtenus à partir d'un polymère contenant un produit selon l'invention ont des propriétés de perméabilité améliorées.

### EXEMPLE 6

Cet exemple concerne l'utilisation d'un produit de l'invention dans un polymère sous formé latex.

100 g d'un latex de chlorure de polyvinylidène DIOFAN A232^{®} (Extrait sec : 46%) sont mélangés à 3,2 g d'une suspension de phosphate de zirconium à 8,7 % telle qu'obtenue par le procédé décrit dans l'exemple 2. Le mélange est agité pendant 1 heure, puis on prélève environ 2 ml du mélange qu'on dépose sur une plaque de verre et à l'aide d'un tire-film on réalise un film de 150 µm d'épaisseur. Ce film après séchage à 25 °C pendant 24 heures est transparent.

## Revendications

1. Phosphate de zirconium, **caractérisé en ce qu'**il est cristallisé et **en ce qu'**il est constitué de particules, sous forme de plaquettes, d'épaisseur d'au plus 30 nm.

2. Phosphate de zirconium selon la revendication 1, **caractérisé en ce qu'**il est constitué de particules d'épaisseur d'au plus 20 nm.

3. Phosphate de zirconium selon la revendication 1 ou 2, **caractérisé en ce que** son diagramme RX présente 2 pics correspondant, le premier, au plan (002) et, le second, qui est un doublet, aux plans (-113) et (202) et **en ce que** le rapport de la surface du pic du plan (002) à celle du doublet des plans (-113) et (202) est supérieur à 1.

4. Phosphate de zirconium selon l'une des revendications précédentes, **caractérisé en ce qu'**il est constitué de particules dont la taille est comprise entre 0,1 µm et 2 µm.

5. Procédé de préparation d'un phosphate de zirconium selon l'un des revendications précédentes, **caractérisé en ce qu'**il comporte les étapes suivantes :
- on met en présence en milieu acide de l'acide phosphorique et un composé du zirconium, ce par quoi on obtient un précipité;
- on sépare ledit précipité du milieu obtenu et on le disperse dans une solution d'acide phosphorique de concentration d'au plus 6M;
- on soumet le milieu ainsi obtenu à un traitement thermique à une température au moins égale à la température d'ébullition dudit milieu.

6. Procédé selon la revendication 5, **caractérisé en ce qu'**on effectue le traitement thermique précité à une température d'au moins 120°C.

7. Procédé selon la revendication 5 ou 6, **caractérisé en ce qu'**on disperse le précipité dans une solution d'acide phosphorique de concentration comprise entre 3M et 4M.

8. Procédé selon l'une des revendications 5 à 7, **caractérisé en ce que** le composé de zirconium est un oxychlorure.

9. Procédé selon l'une des revendications 5 à 8, **caractérisé en ce que** le milieu acide est formé avec de l'acide chlorhydrique.

10. Utilisation d'un phosphate de zirconium selon l'une des revendications 1 à 4, pour la préparation d'un phosphate de zirconium et de sodium pentahydraté, **caractérisé en ce qu'**on prépare le phosphate de zirconium utilisé par un procédé qui comporte les étapes suivantes :
- on met en présence en milieu acide de l'acide phosphorique et un composé du zirconium, ce par quoi on obtient un précipité;
- on sépare ledit précipité du milieu obtenu et on le disperse dans une solution d'acide phosphorique de concentration d'au plus 6M;
- on soumet le milieu ainsi obtenu à un traitement thermique à une température au moins égale à la température d'ébullition dudit milieu;
et **en ce qu'**on ajoute à la dispersion directement issue du traitement thermique précité ou à cette dispersion après lavage un composé du sodium en une quantité telle que le rapport atomique cation Na⁺ (apporté par le composé du sodium)/P soit de 0,5.

11. Utilisation d'un phosphate de zirconium selon l'une des revendications 1 à 4, pour la préparation d'un phosphate de zirconium à structure exfoliée, **caractérisé en ce qu'**on prépare le phosphate de zirconium utilisé par un procédé qui comporte les étapes suivantes :
- on met en présence en milieu acide de l'acide phosphorique et un composé du zirconium, ce par quoi on obtient un précipité;
- on sépare ledit précipité du milieu obtenu et on le disperse dans une solution d'acide phosphorique de concentration d'au plus 6M;
- on soumet le milieu ainsi obtenu à un traitement thermique à une température au moins égale à la température d'ébullition dudit milieu;
et **en ce qu'**on ajoute à la dispersion directement issue du traitement thermique précité ou à cette dispersion après lavage un composé du sodium en une quantité telle que le rapport atomique cation Na⁺ (apporté par le composé du sodium)/P soit supérieur à 0,5, de préférence au moins égal à 0,7; puis on ajoute ensuite un acide, ce par quoi on obtient soit un gel, soit un composé solide qui est remis dans l'eau et qui donne un gel.

12. Utilisation d'un phosphate de zirconium selon l'une des revendications 1 à 4, pour la préparation d'une composition à base d'un matériau macromoléculaire.

13. Utilisation selon la revendication 12, **caractérisé en ce qu'**on prépare une composition à base d'un matériau macromoléculaire choisi parmi les polyamides, le polyéthylène téréphtalate, les latex des copolymères du styrène avec les acrylates, des copolymères styrène-butadiène ou les latex issus de la polymérisation des monomères halogénures vinyliques.

## Claims

1. Zirconium phosphate, **characterized in that** it is crystalline and **in that** it is composed of particles, in the form of platelets, with a thickness of at most 30 nm.

2. Zirconium phosphate according to Claim 1, **characterized in that** it is composed of particles with a thickness of at most 20 nm.

3. Zirconium phosphate according to Claim 1 or 2, **characterized in that** its X-ray diagram exhibits 2 peaks, the first corresponding to the (002) plane and the second, which is a doublet, corresponding to the (-113) and (202) planes, and **in that** the ratio of the area of the peak of the (002) plane to that of the doublet of the (-113) and (202) planes is greater than 1.

4. Zirconium phosphate according to one of the preceding claims, **characterized in that** it is composed of particles having a size of between 0.1 µm and 2 µm.

5. Process for the preparation of a zirconium phosphate according to one of the preceding claims, **characterized in that** it comprises the following stages:
- phosphoric acid and a zirconium compound are brought together in an acidic medium, whereby a precipitate is obtained;
- said precipitate is separated from the medium obtained and is dispersed in a phosphoric acid solution with a concentration of at most 6M;
- the medium thus obtained is subjected to a heat treatment at a temperature at least equal to the boiling point of said medium.

6. Process according to Claim 5, **characterized in that** the abovementioned heat treatment is carried out at a temperature of at least 120°C.

7. Process according to Claim 5 or 6, **characterized in that** the precipitate is dispersed in a phosphoric acid solution with a concentration of between 3M and 4M.

8. Process according to one of Claims 5 to 7, **characterized in that** the zirconium compound is an oxychloride.

9. Process according to one of Claims 5 to 8, **characterized in that** the acidic medium is formed with hydrochloric acid.

10. Use of a zirconium phosphate according to one of Claims 1 to 4 in the preparation of a sodium zirconium phosphate pentahydrate, **characterized in that** the zirconium phosphate used is prepared by a process which comprises the following stages:
- phosphoric acid and a zirconium compound are brought together in an acidic medium, whereby a precipitate is obtained;
- said precipitate is separated from the medium obtained and is dispersed in a phosphoric acid solution with a concentration of at most 6M;
- the medium thus obtained is subjected to a heat treatment at a temperature at least equal to the boiling point of said medium;
and **in that** a sodium compound is added to the dispersion directly resulting from the abovementioned heat treatment or to this dispersion after washing in an amount such that the Na⁺ cation (contributed by the sodium compound)/P atomic ratio is 0.5.

11. Use of a zirconium phosphate according to one of Claims 1 to 4 in the preparation of a zirconium phosphate with an exfoliated structure, **characterized in that** the zirconium phosphate used is prepared by a process which comprises the following stages:
- phosphoric acid and a zirconium compound are brought together in an acidic medium, whereby a precipitate is obtained;
- said precipitate is separated from the medium obtained and is dispersed in a phosphoric acid solution with a concentration of at most 6M;
- the medium thus obtained is subjected to a heat treatment at a temperature at least equal to the boiling point of said medium;
and **in that** a sodium compound is added to the dispersion directly resulting from the abovementioned heat treatment or to this dispersion after washing in an amount such that the Na⁺ cation (contributed by the sodium compound)/P atomic ratio is greater than 0.5, preferably at least equal to 0.7; and then an acid is subsequently added, whereby either a gel or a solid compound is obtained, the latter being put back into water and giving a gel.

12. Use of a zirconium phosphate according to one of Claims 1 to 4 in the preparation of a composition based on a macromolecular material.

13. Use according to Claim 12, **characterized in that** a composition is prepared based on a macromolecular material chosen from polyamides, polyethylene terephthalate, latexes of copolymers of styrene with acrylates, styrene-butadiene copolymers or latexes resulting from the polymerization of vinyl halide monomers.

## Patentansprüche

1. Zirconiumphosphat, **dadurch gekennzeichnet, daß** es kristallin ist und aus plättchenförmigen Teilchen mit einer Dicke von höchstens 30 nm besteht.

2. Zirconiumphosphat nach Anspruch 1, **dadurch gekennzeichnet, daß** es aus Teilchen mit einer Dicke von höchstens 20 nm besteht.

3. Zirconiumphosphat nach Anspruch 1 oder 2, **dadurch gekennzeichnet, daß** sein Röntgendiagramm 2 Peaks aufweist, wobei der erste der (002)-Ebene entspricht und der zweite, bei dem es sich um ein Dublett handelt, der (-113)- und (202)-Ebene entspricht, und das Verhältnis der Fläche des Peaks der (002)-Ebene zur Fläche des Dubletts der (-113)- und (202)-Ebene größer als 1 ist.

4. Zirconiumphosphat nach einem der vorhergehenden Ansprüche, **dadurch gekennzeichnet, daß** es aus Teilchen mit einer Größe zwischen 0, 1 µm und 2 µm besteht.

5. Verfahren zur Herstellung eines Zirconiumphosphats nach einem der vorhergehenden Ansprüche, **dadurch gekennzeichnet, daß** man:
- in einem sauren Medium Phosphorsäure und eine Zirconiumverbindung zusammengibt, wodurch man einen Niederschlag erhält;
- den Niederschlag von dem erhaltenen Medium abtrennt und in einer Phosphorsäurelösung mit einer Konzentration von höchstens 6M dispergiert;
- das so erhaltene Medium einer Wärmebehandlung bei einer Temperatur, die mindestens gleich der Siedetemperatur des Mediums ist, unterwirft.

6. Verfahren nach Anspruch 5, **dadurch gekennzeichnet, daß** man die obige Wärmebehandlung bei einer Temperatur von mindestens 120°C durchführt.

7. Verfahren nach Anspruch 5 oder 6, **dadurch gekennzeichnet, daß** man den Niederschlag in einer Phosphorsäurelösung mit einer Konzentration zwischen 3M und 4M dispergiert.

8. Verfahren nach einem der Ansprüche 5 bis 7, **dadurch gekennzeichnet, daß** es sich bei der Zirconiumverbindung um ein Oxidchlorid handelt.

9. Verfahren nach einem der Ansprüche 5 bis 8, **dadurch gekennzeichnet, daß** das saure Medium mit Salzsäure gebildet wird.

10. Verwendung eines Zirconiumphosphats nach einem der Ansprüche 1 bis 4 zur Herstellung eines Natriumzirconiumphosphatpentahydrats, **dadurch gekennzeichnet, daß** man das verwendete Zirconiumphosphat nach einem Verfahren herstellt, bei dem man:
- in einem sauren Medium Phosphorsäure und eine Zirconiumverbindung zusammengibt, wodurch man einen Niederschlag erhält;
- den Niederschlag von dem erhaltenen Medium abtrennt und in einer Phosphorsäurelösung mit einer Konzentration von höchstens 6M dispergiert;
- das so erhaltene Medium einer Wärmebehandlung bei einer Temperatur, die mindestens gleich der Siedetemperatur des Mediums ist, unterwirft;
und man die direkt aus der obigen Wärmebehandlung erhaltene Dispersion oder diese Dispersion nach Waschen mit einer Natriumverbindung in einer solchen Menge versetzt, daß das Atomverhältnis von Na⁺-Kation (aus der Natriumverbindung) zu P 0,5 beträgt.

11. Verwendung eines Zirconiumphosphats nach einem der Ansprüche 1 bis 4 zur Herstellung eines Zirconiumphosphats mit exfolierter Struktur, **dadurch gekennzeichnet, daß** man das verwendete Zirconiumphosphat nach einem Verfahren herstellt, bei dem man:
- in einem sauren Medium Phosphorsäure und eine Zirconiumverbindung zusammengibt, wodurch man einen Niederschlag erhält;
- den Niederschlag von dem erhaltenen Medium abtrennt und in einer Phosphorsäurelösung mit einer Konzentration von höchstens 6M dispergiert;
- das so erhaltene Medium einer Wärmebehandlung bei einer Temperatur, die mindestens gleich der Siedetemperatur des Mediums ist, unterwirft;
und man die direkt aus der obigen Wärmebehandlung erhaltene Dispersion oder diese Dispersion nach Waschen mit einer Natriumverbindung in einer solchen Menge versetzt, daß das Atomverhältnis von Na⁺-Kation (aus der Natriumverbindung) zu P mehr als 0,5, vorzugsweise mindestens 0,7, beträgt und danach eine Säure zugibt, wodurch man ein Gel oder eine feste Verbindung, welche wieder in Wasser eingebracht wird und ein Gel ergibt, erhält.

12. Verwendung eines Zirconiumphosphats nach einem der Ansprüche 1 bis 4 zur Herstellung einer Zusammensetzung auf Basis eines makromolekularen Materials.

13. Verwendung nach Anspruch 12, **dadurch gekennzeichnet, daß** man eine Zusammensetzung auf Basis eines unter Polyamiden, Polyethylenterephthalat, Latices von Styrol-Acrylat-Copolymeren, Styrol-Butadien-Copolymeren oder aus der Polymerisation von halogenierten Vinylmonomeren erhaltenen Latices ausgewählten makromolekularen Materials herstellt.
